# FASCICULE DE BREVET EUROPEEN

(11) **EP 2 079 876 B1**
(45) Date de publication et mention de la délivrance du brevet: **27.01.2016**
(21) Numéro de dépôt: 07825422.4
(22) Date de dépôt: 10.10.2007
(51) Int. Cl.: D21H 19/58, D21H 17/69

(54) **UTILISATION D'UN AGENT DISPERSANT STERIQUE DE MATIERES MINERALES DANS L'EAU, DISPERSION AQUEUSE OBTENUE ET SON UTILISATION DANS LA FABRICATION DU PAPIER**
VERWENDUNG EINES STERISCH ANSPRUCHSVOLLEN DISPERGIERMITTELS FÜR MINERALSTOFFE IN WASSER, SO ERHALTENE WÄSSRIGE DISPERSION UND DEREN VERWENDUNG BEI DER PAPIERHERSTELLUNG
USE OF A MINERAL-MATERIAL STERIC DISPERSING AGENT IN WATER, AQUEOUS DISPERSION THUS OBTAINED AND USE THEREOF IN PAPER MAKING

(30) Priorité: 19.10.2006 FR 0609166
(43) Date de publication de la demande: 22.07.2009
(73) Titulaire: COATEX S.A.S., 69730 Genay (FR)
(72) Inventeur: GUERRET, Olivier, 69890 La Tour De Salvagny (FR); DUPONT, François, 69004 Lyon (FR); MONGOIN, Jacques, 69550 Quincieux (FR)
(74) Mandataire: Regimbeau
(86) Numéro de dépôt international: PCT/IB2007/003123
(87) Numéro de publication internationale: WO 2008/047220

(56) Documents cités:
- EP-A- 0 892 111
- FR-A- 2 810 261

## Description

La présente invention concerne le secteur technique des procédés de fabrication d'une feuille de papier, faisant intervenir une matière minérale en dispersion et / ou en suspension aqueuse tel que notamment le carbonate de calcium, ladite matière minérale étant stabilisée au moyen d'un dispersant stérique.

Dans le cadre de la fabrication d'une feuille de papier, une première étape consiste en la transformation de la pâte à papier, par l'intermédiaire de la machine à papier, en une feuille de papier, non encore couchée. La pâte à papier contient essentiellement des fibres naturelles ou synthétiques, de l'eau, et une ou plusieurs charges minérales tel que le carbonate de calcium, ainsi que divers autres additifs, ladite charge minérale étant mélangée avec les fibres sous forme de dispersion et / ou de suspension aqueuse. On parle alors de l'utilisation d'une charge minérale (tel que le carbonate de calcium) en masse. La feuille ainsi obtenue peut ensuite être éventuellement couchée au cours d'une deuxième opération qui consiste à déposer sur la surface du papier support une composition aqueuse dénommée "sauce de couchage" qui contient notamment de l'eau, une ou plusieurs charges minérales (tel que le carbonate de calcium), un ou plusieurs liants ainsi que divers additifs.

En matière de charge de masse, on utilise communément du carbonate de calcium, d'origine naturelle ou synthétique, qui permet d'améliorer les propriétés optiques de la feuille de papier telle que notamment sa brillance. Ce carbonate de calcium est en général mis en oeuvre sous forme de dispersion et / ou de suspension aqueuse, où la matière minérale est stabilisée dans l'eau par l'intermédiaire d'agents dispersants.

Dans le cas particulier des papiers dit "supercalandrés", qui subissent une très forte compression au moment de l'opération de calandrage en vue de fournir une feuille très lisse destinée notamment aux impressions de type offset et rotogravure, il est bien connu que la brillance du produit final se dégrade au fur et à mesure que le pH du milieu contenant la pulpe et la matière minérale augmente. On a donc cherché à fabriquer de tels papiers dans un environnement acide et ce, grâce à l'introduction, juste avant la fabrication de la feuille de papier, de gaz carbonique ou d'un acide faible tel que notamment l'acide phosphorique, en vue de diminuer le pH du milieu contenant la pulpe et la matière minérale et de le maintenir à une valeur inférieure à 7.

Or, il est bien connu que le carbonate de calcium, utilisé en milieu acide, se solubilise partiellement, donnant lieu à la présence d'ions calcium dans la phase aqueuse. Cette solubilisation pose le double problème de :
- diminuer la quantité de carbonate de calcium que le formulateur cherche à introduire au final dans la feuille de papier, puisque ce carbonate se solubilise en partie,
- et de faire augmenter la concentration en ions calcium dans la phase aqueuse du milieu contenant la pulpe et le carbonate de calcium, et donc de faire augmenter le pH du milieu, ce qui nuit aux propriétés optiques finales du papier telle que sa brillance.

Il existait donc un réel besoin technique en terme d'une solution permettant de mettre en oeuvre un carbonate de calcium dans un procédé de fabrication de papier en milieu acide, pour palier aux inconvénients précédemment évoqués.

Cette solution fut mise au point à travers la technologie dite "acide faible / chélatant" (ou "WAC" selon l'expression anglaise "Weak Acid / Chelatant"), qui a été décrite dans le document "Neutral groudwood papers : practical and chemical aspects" (International Paper and Coatings Chemistry Symposium, 5th, Montreal, QC, Canada, 16-19 Juin, 2003, Editeur : Pulp and Paper Technical Association of Canada, Montreal, Quebec). Elle repose sur la mise en oeuvre d'un acide faible d'une part, en combinaison avec un agent chélatant du calcium d'autre part. Les carbonates de calcium ainsi fabriqués ont alors été qualifiés de carbonates de calcium "stabilisés-acide" ou "résistants aux acides".

Le mécanisme d'action de la technologie "acide faible / chélatant", tel que proposé dans ce document est le suivant. Dans un premier temps, la réaction entre le carbonate de calcium et l'acide faible donne naissance à des espèces chimiques qui jouent le rôle de tampon pH, vis-à-vis du milieu dans lequel est mis en oeuvre le carbonate de calcium. Par exemple, lorsqu'on utilise de l'acide phosphorique comme acide faible, il y a création en présence de carbonate de calcium d'espèces solubles qui sont l'hydrogéno et le dihydrogénophosphate de calcium, espèces qui permettent de tamponner le milieu aqueux dans lequel est mis en oeuvre ledit carbonate. Dans un deuxième temps, un agent chélatant est introduit dans le milieu, dont le rôle est de stabiliser le système tampon précédemment créé, notamment par l'intermédiaire d'un mécanisme de séquestration des ions en solution. La Demanderesse indique que, à travers l'expression "agent chélatant", on entend un composé qui possède la capacité de se lier à un ion positif avec lequel il forme un composé (ou chélate) dans lequel l'atome central est lié aux atomes voisins par au moins deux liaisons en formant une structure annulaire (voir à ce sujet la définition donnée par le Kirk-Othmer Encyclopedia of Chemical Technology, Vol. 5, pp 339-68).

Ainsi, le document US 5 043 017 décrit-il un carbonate de calcium "stabilisé-acide", par la combinaison d'un agent chélatant du calcium ou d'une base conjuguée d'une part et d'un acide faible d'autre part, le carbonate ainsi obtenu étant en équilibre chimique avec l'agent chélatant ou une base conjuguée ainsi qu'avec l'acide faible. L'agent chélatant est très préférentiellement l'hexamétaphosphate de sodium, alors que l'acide faible est choisi parmi les acides phosphorique, hexamétaphosphorique, citrique, borique, sulfureux, acétique ou leurs mélanges. On obtient ainsi un carbonate de calcium utilisable dans la fabrication de papier en milieu acide, conférant audit papier des propriétés optiques améliorées en terme de coefficient de diffusion de la lumière, d'opacité et de brillance.

En relation avec le document précédent, le document US 5 156 719 décrit une méthode pour augmenter les propriétés optiques d'un papier (ledit papier étant fabriqué notamment en milieu acide) telle que sa brillance, par la mise en oeuvre du carbonate de calcium "stabilisé-acide", tel que décrit dans le document US 5 043 017.

Quant au document WO 98 / 29601, il décrit une suspension aqueuse de carbonate de calcium "stabilisé-acide" comprenant de l'eau, du carbonate de calcium, et un stabilisant acide présent dans une quantité suffisante pour obtenir un pH inférieur à 7. Ledit stabilisant acide est choisi parmi un sel hydrosoluble de calcium, un acide faible, un agent chélatant, le mélange d'un sel hydrosoluble de calcium avec un acide faible ou un agent chélatant. Ledit agent chélatant est notamment choisi parmi les acides polycarboxyliques, acrylique, phosphonique ou sulfonique. On obtient ainsi un carbonate de calcium qui se décompose faiblement lorsque le pH est inférieur à 7, et qui permet la fabrication en milieu acide d'un papier présentant une brillance améliorée.

La présence d'agent chélatant du calcium a même été étendue à la fabrication de papier en milieu neutre, tel qu'indiqué dans le document WO 97 / 41302. L'objectif de ce document est de limiter dans le procédé papetier la présence d'ions calcium, mais aussi de manière plus générale la présence d'ions divalents : tel qu'enseigné par ce document, ces ions divalents peuvent être issus de la décomposition du carbonate de calcium, mais aussi de part la présence de certains composés chimiques dans le procédé de fabrication d'une feuille de papier, tels que le sulfate d'aluminium ou le chlorure de polyaluminium. Dans le procédé de fabrication de la feuille de papier, ces ions divalents peuvent complexer les agents d'encollage telle que la rosine, ce qui diminue l'efficacité desdits agents d'encollage : on observe alors une diminution du phénomène de rétention des charges minérales au sein des fibres. En vue de limiter la présence d'ions divalents dans le procédé de fabrication d'une feuille de papier, le document WO 97 / 41302 propose une solution qui réside dans la mise en oeuvre d'un agent chélatant ou précipitant de ces ions divalents, ledit agent étant un composé phosphaté.

Or, il apparaît aujourd'hui que ces solutions basées sur l'utilisation d'agents chélatants d'ions divalents et notamment de l'ion calcium, présentent un grave inconvénient pour l'homme du métier. En effet, de part leur effet chélatant, ces agents donnent naissance à des complexes des ions présents en phase aqueuse, tel que notamment des complexes solubles du calcium. Dans le cas de la formation de tels complexes, une trop grande concentration de ces espèces en phase aqueuse va conduire à la précipitation d'espèces insolubles.

Or, de manière générale, la formation d'insolubles dans les eaux du procédé de fabrication de la feuille de papier est particulièrement indésirable : elle conduit en effet à la formation de dépôts qui peuvent obstruer des tamis, des filtres, des pompes, des tuyaux ou encore des bouilleurs ou des réfrigérants, un tel phénomène pouvant même conduire au blocage total de la machine papetière. Ces problèmes sont relatés dans "Déposition and scaling in the pulp & paper industry" (Congresso e Exposicao Anual de Celulose e Papel, 35th, Sao Paulo, Brazil, Oct. 14-17, 2002 (2002) 516-534 Publisher: Associacao Brasileira Tecnica de Celulose e Papel, Sao Paulo, Brazil) et "Treatment of waste water from a cellulose and paper factory by ozone and activated sludge" (Vom Wasser (1976), 46, 221-39), qui stigmatisent les inconvénients liés au dépôt d'espèces insolubles à base d'oxalate de calcium dans les installations papetières, ou encore dans le document "Calcium oxalate in bleach plant filtrates" (Minimum Effluent Mills Symposium, San Francisco, Oct. 23-24, 1997 (1997), 51-62 Publisher: TAPPI Press, Atlanta, Ga) qui généralise le problème des dépôts d'espèces chimiques insolubles dans le procédé papetier à la présence de complexes des ions calcium et baryum.

A ce stade de l'exposé, la Demanderesse tient à souligner que, si l'état de la technique démontre clairement que les problèmes liés à la présence d'espèces insolubles à base d'oxalate de calcium sont biens connus de l'industrie papetière, il n'existe en revanche aucun document démontrant que ces inconvénients peuvent être liés à l'utilisation d'agents chélatants du calcium tels que mis en oeuvre selon la technologie dite "acide faible / chélatant". L'identification de ce nouveau problème technique est donc en soi un des mérites dont a fait preuve la Demanderesse.

Poursuivant ses recherches en vue d'utiliser un carbonate de calcium :
- dans un procédé de fabrication du papier, notamment en milieu acide,
- tout en dispersant ledit carbonate de calcium au sein du milieu aqueux dans lequel il est mis en oeuvre,
- et ce, sans avoir recours à des agents chélatants, notamment des agents chélatants d'ions divalents tel que le calcium, qui conduisent à la formation d'espèces insolubles et indésirables dans le procédé de fabrication de la feuille de papier,
   la Demanderesse a mis au point l'utilisation, comme agent dispersant stérique d'au moins une matière minérale dans l'eau, d'un copolymère constitué :
   a) d'au moins un monomère vinylique,
   b) et d'au moins un monomère non ionique, de formule (I) : 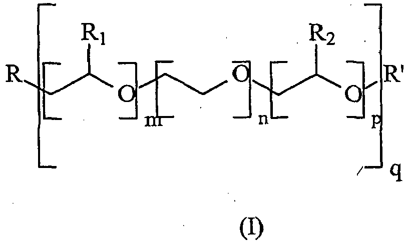 dans laquelle :
      - m et p représentent un nombre de motifs d'oxyde d'alkylène inférieur ou égal à 150,
      - n représente un nombre de motifs d'oxyde d'éthylène inférieur ou égal à 150,
      - q représente un nombre entier au moins égal à 1 et tel que 5 ≤ (m+n+p)q ≤ 150, et préférentiellement tel que 15 ≤ (m+n+p)q ≤ 120,
      - R₁ représente l'hydrogène ou le radical méthyle ou éthyle,
      - R₂ représente l'hydrogène ou le radical méthyle ou éthyle,
      - R représente un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
      - R' représente l'hydrogène ou un radical hydrocarboné ayant 1 à 4 atomes de carbone, R' étant de préférence le radical méthyle,
   ou du mélange de plusieurs monomères de formule (I).

Les dispersions et les suspensions aqueuses de matières minérales ainsi obtenues peuvent alors être mises en oeuvre dans un procédé de fabrication de feuille de papier, et permettent d'éviter les inconvénients de l'art antérieur précédemment énumérés. Au même titre que l'utilisation dudit copolymère en tant qu'agent dispersant stérique de matières minérales, les dispersions et les suspensions aqueuses obtenues, le procédé de fabrication de la feuille de papier à partir de ces dispersions et de ces suspensions, et enfin la feuille de papier obtenue, font aussi partie de la présente invention. Ledit copolymère agissant comme dispersant stérique des matières minérales représente le lien technique entre ces différents objets qui constituent la présente invention.

Sans vouloir être liée à une quelconque théorie, la Demanderesse pense que, notamment dans le cas du carbonate de calcium, ledit copolymère permet la stabilisation des particules de matières minérales en milieu aqueux, non pas grâce à des mécanismes ioniques et chélatants comme ceux mis en jeu avec les dispersants polyacryliques de l'art antérieur, mais par des phénomènes :
- d'adsorption dudit copolymère sur les particules de carbonate de calcium d'une part, ce qui permet audit copolymère de s'ancrer sur lesdites particules,
- et de répulsion stérique induite par la présence du monomère non-ionique de formule (I), ce qui conduit à un écrantage de la surface des particules de carbonate de calcium, et donc à une stabilisation de l'ensemble des ces particules en suspension aqueuse.

On parle ainsi de dispersant stérique, au sens où un tel dispersant est notamment défini dans le chapitre 1 du document "Fluidification de suspensions concentrées simples et mixtes par adsorption de polymères : application aux dispersions aqueuses de poudres d'alumine et / ou de rutile par le polyacrylate de sodium et des copolymères dérivés" (Thèse de Doctorat de Myriam Gourmand, Université Paris VI, 1998).

De manière particulièrement avantageuse, ce mécanisme de stabilisation est indépendant du pH et de la force ionique du milieu aqueux dans lequel sont mis en oeuvre le carbonate de calcium et ces copolymères. Ces copolymères ne sont pas des agents chélatants des ions, et notamment des ions divalents, et notamment du calcium : ils ne conduisent pas à la formation de complexes du calcium en milieu aqueux. Ils stabilisent le carbonate de calcium en milieu aqueux par des mécanismes d'encombrement stérique, provocant ainsi un écrantage de la surface du carbonate de calcium, ce qui diminue sa solubilité et donc, ce qui limite la présence d'ions calcium en phase aqueuse.

Par voie de conséquence, une telle solution permet d'éviter le recours à la technologie dite "acide faible / chélatant", et de palier aux inconvénients liés à l'utilisation d'agents chélatants qui conduisent à la formation d'espèces insolubles et indésirables dans le procédé de fabrication d'une feuille de papier, tels que notamment les oxalates de calcium.

Un des mérites de la Demanderesse réside donc sur le fait qu'elle a su identifier un nouveau problème technique, qui repose sur la formation d'espèces insolubles dans la fabrication du papier (tels que les oxalates de calcium) de part la mise en oeuvre d'agents chélatants selon la technologie dite "acide faible / chélatant" (ces espèces insolubles pouvant conduire au blocage complet d'une unité de fabrication du papier).

Un autre de ses mérites réside dans le fait qu'elle a su identifier un mode de stabilisation original du carbonate de calcium, non pas lié à des mécanismes ioniques et chélatants comme ceux mis en oeuvre par utilisation des polyacrylates de l'art antérieur, mais basé sur des mécanismes de répulsion stérique. Un tel mécanisme permet de disperser de façon stable le carbonate de calcium en milieu aqueux, de manière indépendante du pH et de la force ionique du milieu, en limitant la présence d'ions calcium en phase aqueuse et ce, sans avoir recours aux agents chélatants de l'art antérieur.

Un autre de ses mérites repose sur le fait qu'elle a su mettre au point un dispersant particulier du carbonate de calcium, dont la capacité à disperser ledit carbonate repose précisément sur ce mécanisme de répulsion stérique. Ce dispersant n'est pas un agent chélatant du calcium au sens où il ne conduit pas à la formation de complexes du calcium en phase aqueuse. Ce dispersant consiste en le copolymère constitué d'au moins un monomère vinylique et d'au moins un monomère de formule (I) tel qu'explicité auparavant.

L'ensemble des ces propriétés :
- capacité dudit copolymère à disperser de manière stable le carbonate, de calcium en suspension aqueuse, par des mécanismes d'adsorption à la surface du carbonate et de répulsion stérique induits par la présence du monomère de formule (I),
- limitation de la présence d'ions divalents en suspension aqueuse,
- rôle inerte dudit copolymère, en terme d'agent chélatant des ions en solution aqueuse, et notamment des ions divalents tel que le calcium (c'est-à-dire absence de complexes du calcium en phase aqueuse),

est largement illustré dans les exemples. La Demanderesse se permet d'insister sur l'ensemble de ces propriétés, et sur les preuves qui en sont apportées dans le présent document. Son intention est de souligner que, même s'il existe des documents dans l'état de la technique qui font état de l'utilisation de copolymères de structure chimique proche, aucun d'eux ne révèle ou ne suggère pour ces copolymères la fonction d'agent dispersant stérique et des propriétés précédemment énumérées qui découlent de cette fonction.

Ainsi, la Demanderesse connaît les documents EP 1 294 476, EP 1 572 764, EP 1 565 504, EP 1 569 970, EP 0 892 020, EP 0 892 111 qui enseignent que des copolymères contenant :
- au moins un monomère à insaturation éthylénique,
- et au moins un monomère non ionique de formule (I), mais où l'éventail de possibilité est bien plus large que dans le cas de la présente Demande,
peuvent être utilisés comme agents dispersants de matières minérales.

En premier lieu, aucun de ces documents ne concerne le même problème technique que celui abordé dans la présente Demande : il n'existe donc aucun élément objectif qui permettait de les considérer dans l'état de la technique relatif à la présente Demande.

En deuxième lieu, même si l'homme du métier avait pris connaissance de ces documents, il n'y aurait trouvé aucune indication lui révélant ou lui suggérant que les copolymères de la présente invention sont des dispersants stériques de matières minérales en suspension aqueuse, inertes vis-à-vis de la chélation des ions en solution, et conduisant aussi à une réduction de la quantité de ces ions en solution.

Enfin, rien n'indique ou ne suggère dans ces documents le choix particulier du groupement R', tel que défini dans l'objet de la présente Demande.

Les copolymères, tels que mis en oeuvre dans la présente invention, permettent donc :
- à la fois de disperser de manière stable les particules de matières minérales (et notamment de carbonate de calcium) en milieu aqueux et ce, par des mécanismes d'adsorption à la surface des particules minérales et de répulsion stérique induits par la présence des monomères de formule (I),
- de limiter la présence d'ions divalents dans la phase aqueuse tels que notamment les ions calcium,
- de parvenir à cet objectif sans avoir recours aux agents chélatant de l'art antérieur (tels que les composés phosphatés, ou les acides polycarboxyliques tel que l'acide polyacrylique) qui conduisent à la formation de complexes qui demeurent indésirables dans les installations papetières.

Enfin, il existe un dernier avantage technique lié à la mise en oeuvre des polymères selon l'invention, en vue de fabriquer des dispersions et des suspensions aqueuses de carbonate de calcium, destinées à être utilisées en charge de masse. Comme le démontrent clairement les exemples de la présente Demande, les polymères selon l'invention permettent, par rapport à des polymères de l'art antérieur, d'augmenter de manière significative le phénomène de rétention de charge. Les polymères selon l'invention qui ont été développés comme agents de substitution aux agents chélatants de l'art antérieur qui conduisaient à des quantités trop élevées de complexes insolubles en phase aqueuse, s'avèrent aussi très efficaces en vue d'améliorer le phénomène de rétention de charge : rien dans l'état de la technique ne divulguait ou ne suggérait une telle efficacité.

Aussi, un premier objet de l'invention est l'utilisation, comme agent dispersant stérique d'au moins une matière minérale dans l'eau, d'un copolymère caractérisé en ce qu'il est constitué :
a) d'au moins un monomère vinylique,
b) et d'au moins un monomère non ionique, de formule (I) : 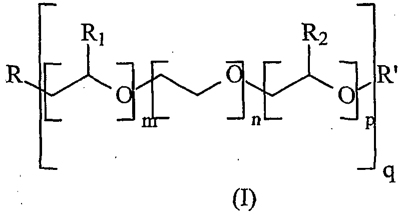 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 4 atomes de carbone, R' étant de manière extrêmement préférentielle le radical méthyle,
ou du mélange de plusieurs monomères de formule (I).

Cette utilisation est aussi caractérisée en ce que ledit copolymère est constitué, exprimé en pourcentage en poids des monomères :
a) de 0,5 % à 50 %, préférentiellement de 1 % à 25 %, très préférentiellement de 5 % à 20 %, d'au moins un monomère vinylique,
b) de 50 % à 99,5 %, préférentiellement de 75 % à 99 %, très préférentiellement de 80% à 95 %, d'au moins un monomère non ionique, de formule (I) : 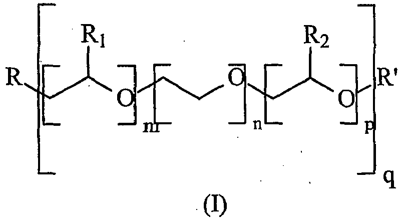 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 4 atomes de carbone, R' étant de manière extrêmement préférentielle le radical méthyle,
   ou du mélange de plusieurs monomères de formule (I),
   la somme des pourcentages des monomères a) et b) étant égale à 100 %.

Cette utilisation est aussi caractérisée en ce que le monomère vinylique a) est choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamides, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères.

Dans une première variante, l'utilisation selon l'invention est caractérisée en ce que le monomère vinylique a) est l'acide acrylique.

Dans une deuxième variante, l'utilisation selon l'invention est caractérisée en ce que le monomère vinylique a) est l'acide méthacrylique.

Dans une troisième variante, l'utilisation selon l'invention est caractérisée en ce que le monomère vinylique a) est l'acrylamide.

Dans une quatrième variante, l'utilisation selon l'invention est caractérisée en ce que le monomère vinylique a) est le méthacrylamide.

Dans une cinquième variante, l'utilisation selon l'invention est caractérisée en ce que le monomère vinylique a) est un ester (méth)acrylique de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] trimethyl ammonium, de chlorure ou de sulfate de diméthyl diallyl ammonium, de chlorure ou de sulfate de [3-(méthacrylamido) propyl] triméthyl ammonium.

Cette utilisation est aussi caractérisée en ce que ledit copolymère est obtenu sous forme acide et éventuellement distillé, et est partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de sodium, de magnésium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est choisi parmi l'hydroxyde et / ou l'oxyde de lithium.

Cette utilisation est aussi caractérisée en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ledit copolymère peut être, avant ou après la réaction de neutralisation totale ou partielle, traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

L'utilisation d'un agent dispersant stérique d'au moins une matière minérale dans l'eau selon l'invention, est aussi caractérisée en ce que la matière minérale est choisie parmi le carbonate de calcium naturel ou synthétique, les dolomies, le calcaire, le kaolin, le talc, le gypse, la chaux, la magnésie, le dioxyde de titane, le blanc satin, le sulfate de baryum, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que ladite matière minérale est choisie préférentiellement parmi le carbonate de calcium naturel, ou synthétique ou le talc ou leurs mélanges, et en ce qu'elle est très préférentiellement choisie parmi le carbonate de calcium naturel ou synthétique ou leurs mélanges.

Cette utilisation est enfin caractérisée en ce qu'on met en oeuvre de 0,05 % à 5 %, préférentiellement de 0,1 % à 3 %, très préférentiellement de 0,3 % à 1,5 % en poids sec dudit copolymère, par rapport au poids sec de matières minérales.

Un autre objet de l'invention consiste en les dispersions et / ou les suspensions aqueuses d'au moins une matière minérale, caractérisées en ce qu'elles contiennent, comme agent dispersant stérique de ladite matière minérale, un copolymère constitué :
a) d'au moins un monomère vinylique,
b) et d'au moins un monomère non ionique, de formule (I) : 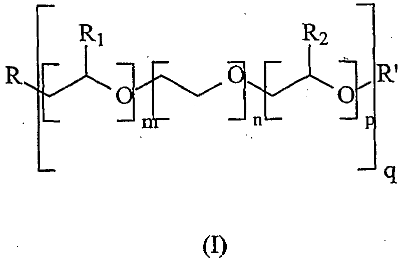 dans laquelle:
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 4 atomes de carbone, R' étant de manière extrêmement préférentielle le radical méthyle,
ou du mélange de plusieurs monomères de formule (I).

Ces dispersions et / ou ces suspensions aqueuses sont aussi caractérisées en ce que ledit copolymère est constitué, exprimé en pourcentage en poids des monomères :
a) de 0,5 % à 50 %, préférentiellement de 1 % à 25 %, très préférentiellement de 5 % à 20 %, d'au moins un monomère vinylique,
b) de 50 % à 99,5 %, préférentiellement de 75 % à 99 %, très préférentiellement de 80 % à 95 %, d'au moins un monomère non ionique, de formule (I) : 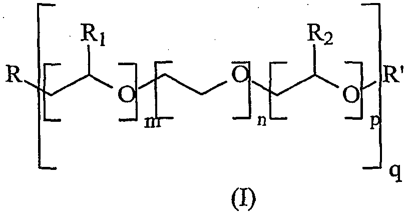 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 4 atomes de carbone, R' étant de manière extrêmement préférentielle le radical méthyle,
ou du mélange de plusieurs monomères de formule (I),
la somme des pourcentages en poids des monomères a) et b) étant égale à 100 %.

Ces dispersions et / ou ces suspensions aqueuses sont aussi caractérisées en ce que le monomère vinylique a) est choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamide, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères.

Dans une première variante, ces dispersions et / ou ces suspensions aqueuses sont caractérisées en ce que le monomère vinylique a) est l'acide acrylique.

Dans une deuxième variante, ces dispersions et / ou ces suspensions aqueuses sont caractérisées en ce que le monomère vinylique a) est l'acide méthacrylique.

Dans une troisième variante, ces dispersions et / ou ces suspensions aqueuses sont caractérisées en ce que le monomère vinylique a) est l'acrylamide.

Dans une quatrième variante, ces dispersions et / ou ces suspensions aqueuses sont caractérisées en ce que le monomère vinylique a) est le méthacrylamide.

Dans une cinquième variante, ces dispersions et / ou ces suspensions aqueuses sont caractérisées en ce que le monomère vinylique a) est un ester (méth)acrylique de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium.

Ces dispersions et / ou ces suspensions aqueuses sont aussi caractérisées en ce que ledit copolymère est obtenu sous forme acide et éventuellement distillé, et est partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de sodium, de magnésium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est choisi parmi l'hydroxyde et / ou l'oxyde de lithium.

Ces dispersions et / ou ces suspensions aqueuses sont aussi caractérisées en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Ces dispersions et / ou ces suspensions aqueuses sont aussi caractérisées en ce que ledit copolymère peut être, avant ou après la réaction de neutralisation totale ou partielle, traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Ces dispersions et / ou ces suspensions aqueuses sont aussi caractérisées en ce que la matière minérale est choisie parmi le carbonate de calcium naturel ou synthétique, les dolomies, le calcaire, le kaolin, le talc, le gypse, la chaux, la magnésie, le dioxyde de titane, le blanc satin, le sulfate de baryum, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que ladite matière minérale est choisie préférentiellement parmi le carbonate de calcium naturel ou synthétique ou le talc ou leurs mélanges, et en ce qu'elle est très préférentiellement choisie parmi le carbonate de calcium naturel ou synthétique ou leurs mélanges.

Ces dispersions et / ou ces suspensions aqueuses sont aussi caractérisées en ce qu'elles présentent, lorsque la matière minérale est un carbonate de calcium, une teneur en ions calcium en phase aqueuse inférieure à 30 ppm, préférentiellement inférieure à 15 ppm.

Ces dispersions et / ou ces suspensions aqueuses sont aussi caractérisées en ce qu'elles contiennent de 0,05 % à 5 %, préférentiellement de 0,1 % à 3 %, très préférentiellement de 0,3 % à 1,5 % en poids sec dudit copolymère, par rapport au poids sec de matières minérales.

Un autre objet de l'invention est un procédé de fabrication d'une feuille de papier à partir d'une pâte, ladite pâte étant issue du mélange de fibres naturelles et / ou synthétiques, d'eau, et d'au moins une dispersion et / ou suspension aqueuse d'au moins une matières minérale, caractérisé en ce que ladite dispersion et / ou suspension contient, comme agent dispersant stérique de ladite matière minérale, au moins un copolymère constitué :
a) d'au moins un monomère vinylique,
b) et d'au moins un monomère non ionique, de formule (I) : 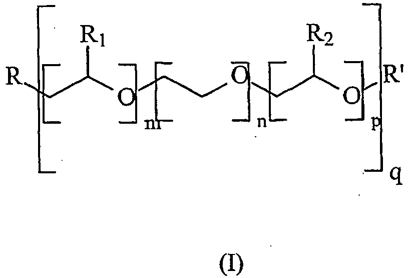 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide,
   - R' représente l'hydrogène ou un radical hydrocarboné ayant 1 à 4 atomes de carbone, R' étant de manière extrêmement préférentielle le radical méthyle,
ou du mélange de plusieurs monomères de formule (I).

Bien évidemment, l'homme du métier pourra ajouter, dans la fabrication de ladite pâte, des autres additifs bien connus de lui.

Ce procédé est aussi caractérisé en ce que ledit copolymère est constitué, exprimé en pourcentage en poids des monomères :
a) de 0,5 % à 50 %, préférentiellement de 1 % à 25 %, très préférentiellement de 5 % à 20 %, d'au moins un monomère vinylique,
b) de 50 % à 99,5 %, préférentiellement de 75 % à 99 %, très préférentiellement de 80 % à 95 %, d'au moins un monomère non ionique, de formule (I) : 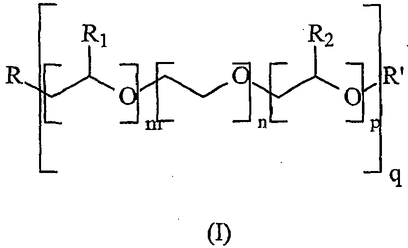 dans laquelle:
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q < 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthaclylamide,
   - R' représente l'hydrogène ou un radical hydrocarboné ayant 1 à 4 atomes de carbone, R' étant de manière extrêmement préférentielle le radical méthyle,
   ou du mélange de plusieurs monomères de formule (I),
   la somme des pourcentages en poids des monomères a) et b) étant égale à 100 %.

Ce procédé est aussi caractérisé en ce que le monomère vinylique a) est choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamide, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] diméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères.

Dans une première variante, le procédé selon l'invention est caractérisé en ce que le monomère vinylique a) est l'acide acrylique.

Dans une deuxième variante, le procédé selon l'invention est caractérisé en ce que le monomère vinylique a) est l'acide méthacrylique.

Dans une troisième variante, le procédé selon l'invention est caractérisé en ce que le monomère vinylique a) est l'acrylamide.

Dans une quatrième variante, le procédé selon l'invention est caractérisé en ce que le monomère vinylique a) est le méthacrylamide.

Dans une cinquième variante, le procédé selon l'invention est caractérisé en ce que le monomère vinylique a) est un ester (méth)acrylique de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] diméthyl ammonium, de chlorure ou de sulfate de [3-(acrylamido)propyl]triméthyl ammonium, de chlorure ou de sulfate de diméthyl diallyl ammonium, de chlorure ou de sulfate de [3-(méthacrylamido) propyl] triméthyl ammonium.

Ce procédé est aussi caractérisé en ce que ledit copolymère est obtenu sous forme acide et éventuellement distillé, et est partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de sodium, de magnésium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est choisi parmi l'hydroxyde et / ou l'oxyde de lithium.

Ce procédé est aussi caractérisé en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

Ce procédé est aussi caractérisé en ce que ledit copolymère peut être, avant ou après la réaction de neutralisation totale ou partielle, traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Ce procédé est aussi caractérisé en ce que la matière minérale est choisie parmi le carbonate de calcium naturel ou synthétique, les dolomies, le calcaire, le kaolin, le talc, le gypse, la chaux, la magnésie, le dioxyde de titane, le blanc satin, le sulfate de baryum, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que ladite matière minérale est choisie préférentiellement parmi le carbonate de calcium naturel ou synthétique ou le talc ou leurs mélanges, et en ce qu'elle est très préférentiellement choisie parmi le carbonate de calcium naturel ou synthétique ou leurs mélanges.

Ce procédé est aussi caractérisé en ce que les dispersions et / ou suspensions de matières minérales présentent, lorsque la matière minérale est un carbonate de calcium, une teneur en ions calcium en phase aqueuse inférieure à 30 ppm, préférentiellement inférieure à 15 ppm.

Ce procédé est aussi caractérisé en ce que les dispersions et / ou suspensions aqueuses d'au moins une matière minérale, contiennent de 0,05 % à 5 %, préférentiellement de 0,1 % à 3 %, très préférentiellement de 0,3 % à 1,5 % en poids sec dudit copolymère, par rapport au poids sec de matières minérales.

Ce procédé est aussi caractérisé en ce que le pH de la pâte à papier est inférieur à 9, préférentiellement 8, très préférentiellement 7,5.

Ce procédé est alors caractérisé en ce que le pH de la pâte à papier est ajusté au moyen d'un acide faible choisi préférentiellement parmi le dioxyde de carbone et / ou l'acide phosphorique.

### EXEMPLES

Dans tous les exemples, le poids moléculaire des polymères mis en oeuvre est déterminé selon la méthode explicitée ci-dessous, par Chromatographie d'Exclusion Stérique (CES).

1 mL de la solution de polymère est mis sur une coupelle, qui est ensuite évaporée à température ambiante sous vide de pompe à palettes. Le soluté est repris par 1 mL de l'éluant de la CES, et l'ensemble est ensuite injecté dans l'appareil de CES. L'éluant de la CES est une solution de NaHCO₃ : 0,05 mole/L, NaNO₃ : 0,1 mole/L, triéthylamine 0,02 mole/L, NaN₃ 0,03 % massique. La chaîne de CES contient une pompe isocratique (Waters™ 515) dont le débit est réglé à 0.5 mL/min, un four contenant une précolonne de type "Guard Column Ultrahydrogel Waters™", une colonne linéaire de 7,8 mm de diamètre interne et 30 cm de longueur de type "Ultrahydrogel Waters™" et un détecteur réfractométrique de type RI Waters™ 410. Le four est porté à la température de 60°C et le réfractomètre à 50°C. Le logiciel de détection et de traitement du chromatogramme est le logiciel SECential, fourni par "L.M.O.P.S. CNRS, Chemin du Canal, Vernaison, 69277". La CES est étalonnée par une série de 5 étalons de poly(acrylate) de sodium fourni par Polymer Standards Service.

### Exemple 1

Cet exemple a pour objet d'illustrer l'utilisation selon l'invention d'un copolymère comme agent dispersant stérique d'un carbonate de calcium naturel, ledit carbonate de calcium étant dispersé en milieu aqueux.

Cet exemple illustre aussi les dispersions aqueuses de carbonate de calcium selon l'invention.

Cet exemple a aussi pour objet d'illustrer que les dispersions aqueuses de carbonate de calcium, ainsi obtenues, sont stables dans le temps.

Cet exemple a aussi pour objet d'illustrer que la mise en oeuvre de copolymères selon l'invention, réduit de manière très sensible la quantité d'ions calcium dans la phase aqueuse de la dispersion de carbonate de calcium, par rapport à cette même quantité mesurée dans le cadre d'une dispersion de carbonate de calcium réalisée avec des agents dispersants chélatants de l'art antérieur.

Dans chacun des essais n° 1 à 7, on commence par disperser, selon les méthodes bien connues de l'homme du métier, un carbonate de calcium naturel qui est un marbre de Norvège dont la granulométrie est telle que 65 % en poids des particules ont un diamètre moyen inférieur à 1 µm, telle que mesurée avec un appareil de type Sedigraph™ 5100 commercialisé par la société MICROMERITICS™.
On obtient ainsi une dispersion aqueuse dont la teneur en poids sec de carbonate de calcium est égale à 65 % de son poids total.

### Essai n° 1

Cet essai illustre l'art antérieur.
Il met en oeuvre 0,33 % en poids, par rapport au poids sec de carbonate de calcium, d'un acide polyacrylique totalement neutralisé par la soude et de poids moléculaire égal à 5 500 g/mol.

### Essai n° 2

Cet essai illustre l'art antérieur.
Il met en oeuvre 0,33 % en poids, par rapport au poids sec de carbonate de calcium, d'un acide polyacrylique totalement neutralisé par la soude et de poids moléculaire égal à 12 000 g/mol.

### Essai n° 3

Cet essai illustre l'art antérieur.
Il met en oeuvre 0,33 % en poids, par rapport au poids sec de carbonate de calcium, d'un copolymère constitué de 69 % en poids d'acide acrylique et de 31 % en poids d'anhydride maléique, totalement neutralisé par la soude, et de poids moléculaire égal à 13 500 g/mol.

### Essai n° 4

Cet essai illustre l'invention.
Il met en oeuvre 0,33 % en poids, par rapport au poids sec de carbonate de calcium, d'un copolymère constitué de :
a) 13,7 % en poids d'acide acrylique et 1,6 % en poids d'acide méthacrylique,
b) 84,7 % en poids de méthacrylate de méthoxy polyéthylène glycol de poids moléculaire 5 000 g/mol,
totalement neutralisé par la soude, et de poids moléculaire égal à 32 500 g/mol.

### Essai n° 5

Cet essai illustre l'invention.
Il met en oeuvre 0,33 % en poids, par rapport au poids sec de carbonate de calcium, d'un copolymère constitué de :
a) 13,6 % en poids d'acide acrylique et 4,9 % en poids d'acide méthacrylique,
b) 81,5 % en poids de méthacrylate de méthoxy polyéthylène glycol de poids moléculaire 2 000 g/mol,
totalement neutralisé par la soude, et de poids moléculaire égal à 42 300 g/mol.

### Essai n° 6

Cet essai illustre l'invention.
Il met en oeuvre 0,33 % en poids, par rapport au poids sec de carbonate de calcium, d'un copolymère constitué de :
a) 13,7 % en poids d'acide acrylique et 1,6 % en poids d'acide méthacrylique,
b) 84,7 % en poids de méthacrylate de méthoxy polyéthylène glycol de poids moléculaire 5 000 g/mol,
totalement neutralisé par le lithium, et de poids moléculaire égal à 32 000 g/mol.

### Essai n° 7

Cet essai illustre l'invention.
Il met en oeuvre 0,33 % en poids, par rapport au poids sec de carbonate de calcium, d'un copolymère constitué de :
a) 13,0 % en poids d'acrylamide,
b) 87,0 % en poids de méthacrylate d'oxyéthylène et d'oxypropylène (dans un rapport 90 / 10 en poids) de poids moléculaire 3 000 g/mol,
non neutralisé, et de poids moléculaire égal à 38 000 g/mol.

On détermine ensuite pour chaque essai :
- les viscosités Brookfield™, mesurée à 25°C, et à 10 et 100 tours / minute avec le module adéquat, à l'instant t=0, respectivement notées µ₁₀ (t0) et µ₁₀₀ (t0),
- les viscosités Brookfield™, mesurée à 25°C, et à 10 et 100 tours / minute avec le module adéquat, à l'instant t=8 jours avant agitation de la suspension, respectivement notées µ₁₀ (t8 AVAG) et µ₁₀₀ (t8 AVAG),
- les viscosités Brookfield™, mesurée à 25°C, et à 10 et 100 tours / minute avec le module adéquat, à l'instant t=8 jours après agitation de la suspension pendant 1 minute, respectivement notées µ₁₀ (t8 APAG) et µ₁₀₀ (t8 APAG),

On détermine également la concentration en ions calcium et en ions magnésium de la phase aqueuse par électrophorèse capillaire, au moyen d'un appareil Beckman™ MDQ, utilisant la détection UV à une longueur d'onde de 457 nm.
L'échantillon est injecté par pressurisation, pendant 5 secondes.
La mesure est réalisée à une température de 30°C et l'intensité du courant est de 30 kV. Le capillaire est en silice fondue, d'un diamètre égale à 75 µm et d'une longueur égale à 50 cm.
L'électrolyte a un pH de 4,5 et est un mélange d'éther-couronne 18C6 (50 milli molaire) et d'imidazoline (10 milli molaire).

L'ensemble des ces résultats est indiqué dans le tableau 1.

**Tableau 1**

| **Essai n°** | | **1** | **2** | **3** | **4** | **5** | **6** | **7** |
|---|---|---|---|---|---|---|---|---|
| **Art Antérieur (AA) / Invention (IN)** | | AA | AA | AA | IN | IN | IN | IN |
| **Viscosités Brookfield™** | **µ₁₀ (t0)** | 2500 | 2300 | 1090 | 500 | 1750 | 510 | 1800 |
| | **µ₁₀₀ (t0)** | 600 | 500 | 220 | 200 | 400 | 200 | 500 |
| | **µ₁₀ (t8AVAG)** | 4500 | 4100 | 3820 | 2060 | 2800 | 2120 | 2040 |
| | **µ₁₀₀ (t8AVAG)** | 1000 | 870 | 740 | 480 | 590 | 480 | 490 |
| | **µ₁₀ (t8APAG)** | 3200 | 2800 | 1850 | 610 | 1250 | 620 | 620 |
| | **µ₁₀₀ (t8APAG)** | 810 | 660 | | 250 | 300 | 270 | 280 |
| **[Ca²⁺] (ppm)** | | 83 | 70 | 65 | 7 | 6 | 7 | 6 |
| **[Mg²⁺] (ppm)** | | 8 | 6 | 4 | <1 | <1 | <1 | <1 |

Ces résultats démontrent que les copolymères selon l'invention :
- permettent d'obtenir des suspensions aqueuses de carbonate de calcium, dispersées et stables dans le temps ; à ce titre, les essais n° 4 et 6 conduisent même aux viscosités Brookfield™ les plus faibles ;
- permettent de limiter la quantité d'ions calcium et magnésium dans la phase aqueuse et ce, de manière très notable, par rapport à des homopolymères de l'acide acrylique de l'art antérieur (cas des essais n° 1 et 2), et à un copolymère de l'acide acrylique et de l'anhydride maléique de l'art antérieur (cas de l'essai n° 3).

Ces résultats illustrent donc le mérite de la Demanderesse qui est parvenue à mettre au point l'utilisation d'un copolymère comme dispersant stérique du carbonate de calcium naturel, et qui limite la présence des ions divalents dans la phase aqueuse de la dispersion de carbonate de calcium obtenue.

### Exemple 2

Cet exemple a pour objet de démontrer que les copolymères qui sont mis en oeuvre dans la présente invention, ne conduisent pas à la formation de chélates solubles du calcium en phase aqueuse, à la différence de polymères de l'art antérieur, tels que notamment un homopolymère de l'acide acrylique et un copolymère de l'acide acrylique et de l'anhydride maléique, ces polymères étant des agents dispersants et chélatants bien connus de l'art antérieur.

On réalise donc un test dont l'objet est de mettre en évidence le pouvoir chélatant de polymères, en terme de formation de chélates solubles du calcium.

Pour ce faire, on introduit dans un bêcher :
- le polymère à tester (0,5 g),
- de l'eau permutée (20 ml),
- une solution de carbonate de sodium à 0,5 mole/L (20 mL),
- une solution d'hydroxyde de sodium à 0,1 mole/L (qsp pH =11).

Puis on introduit dans ce bécher, goutte à goutte, une solution d'acétate de calcium, et on suit la turbidité du milieu au moyen d'un photomètre. Après ajout de chaque goutte d'acétate de calcium, le photomètre attend que la turbidité se stabilise avant de mesurer celle-ci.

Pour un agent formant des chélates solubles du calcium, la transmittance ne varie pas tant que la quantité dudit agent est suffisamment importante pour former ces chélates solubles du calcium. Cette réaction de chélation est en fait en compétition avec la réaction de précipitation du carbonate de calcium. Pour un certain volume d'acétate de calcium introduit, la précipitation du carbonate de calcium a lieu de manière irréversible, et on observe un trouble du milieu : il y a alors une brusque chute de la transmittance. On détermine ainsi le volume V_{equ.} de solution introduite à partir duquel la précipitation du carbonate de calcium a lieu de manière irréversible : c'est le volume à partir duquel on observe une brusque diminution de la transmittance.

Pour un agent non chélatant du calcium, la précipitation du carbonate de calcium est immédiate, c'est-à-dire qu'elle intervient dès la première goutte de solution d'acétate de calcium introduite.

Ce test est donc parfaitement adapté pour déterminer la capacité d'un polymère à former des chélates solubles du calcium et ce, malgré la propension élevée du carbonate de calcium à précipiter en milieu aqueux.

### Essai n° 8

Cet essai illustre l'art antérieur et met en oeuvre un copolymère constitué de 69 % en poids d'acide acrylique et de 31 % en poids d'anhydride maléique, totalement neutralisé par la soude, et de poids moléculaire égal à 13 500 g/mol.

### Essai n° 9

Cet essai illustre l'art antérieur et met en oeuvre un homopolymère de l'acide acrylique, totalement neutralisé par la soude, et de poids moléculaire égal à 4 000 g/mol.

### Essai n° 10

Cet essai illustre l'art antérieur et met en oeuvre l'acide éthylène-diaminé-tétracétique (EDTA).

### Essai n° 11

Cet essai illustre l'invention et met en oeuvre un copolymère constitué de :
a) 13,6 % en poids d'acide acrylique et 4,9 % en poids d'acide méthacrylique,
b) 81,5 % en poids de méthacrylate de méthoxy polyéthylène glycol de poids moléculaire 2 000 g/mol,
totalement neutralisé par la soude, et de poids moléculaire égal à 42 300 g/mol.

### Essai n° 12

Cet essai illustre l'invention et met en oeuvre un copolymère constitué de :
a) 13,7 % en poids d'acide acrylique et 1,6 % en poids d'acide méthacrylique,
b) 84,7 % en poids de méthacrylate de méthoxy polyéthylène glycol de poids moléculaire 5 000 g/mol,
totalement neutralisé par la soude, et de poids moléculaire égal à 32 500 g/mol.

### Essai n° 13

Cet essai illustre l'invention et met en oeuvre un copolymère constitué de :
a) 13,0 % en poids d'acrylamide,
b) 87,0 % en poids méthacrylate d'oxyéthylène et d'oxypropylène (dans un rapport 90 / 10 en poids) de poids moléculaire 3 000 g/mol,
non neutralisé, et de poids moléculaire égal à 38 000 g/mol.

Le tableau 2 indique les valeurs de V_{equ.} (en ml) obtenues pour chacun des essais n° 8 à 13.

**Tableau 2**

| **Essai n°** | 8 | 9 | 10 | 11 | 12 | 13 |
|---|---|---|---|---|---|---|
| **Art Antérieur (AA) / Invention (IN)** | AA | AA | AA | IN | IN | IN |
| **V_{equ.} (ml)** | 3,5 | 4,7 | 7,6 | < 0,2 | < 0,2 | < 0,2 |

Dans le cas des essais n° 11, 12 et 13 uniquement, la solution contenue dans le bêcher devient turbide dès l'ajout de la première goutte de la solution d'acétate de calcium.

Pour les 3 polymères correspondant aux essais n° 11, 12 e 13, le volume de solution d'acétate de calcium pour lequel on observe la précipitation de carbonate de calcium est en dessous du seuil de mesure de la méthode (on estime à 0,2 ml le volume de chaque goutte d'acétate de calcium introduit).

Par conséquent, la précipitation de carbonate de calcium n'est pas affectée par les polymères selon l'invention mis en oeuvre dans les essais n° 11, 12 et 13 : ces polymères ne conduisent donc pas à la formation de chélates solubles du calcium en phase aqueuse.

### Exemple 3

Cet exemple a pour objet de démontrer que les copolymères qui sont mis en oeuvre dans la présente invention, ne conduisent pas à la formation de chélates insolubles du calcium en phase aqueuse, à la différence de polymères de l'art antérieur, tels que notamment des homopolymères de l'acide acrylique, ces homopolymères étant des agents dispersants et chélatants bien connus de l'art antérieur.
On réalise donc un test dont l'objet est de mettre en évidence le pouvoir chélatant de polymères, en terme de formation de chélates insolubles du calcium.

Pour ce faire, on introduit dans un bêcher :
- le polymère à tester (0,5 g),
- de l'eau permutée (20 ml),
- une solution d'hydroxyde de sodium à 0,1 mole/L (qsp pH =10).

Puis on introduit dans ce bécher, goutte à goutte, une solution de chlorure de calcium, et on suit la turbidité du milieu au moyen d'un photomètre. Après ajout de chaque goutte de chlorure de calcium, le photomètre attend que la turbidité se stabilise avant de mesurer celle-ci.

Cette méthode permet de représenter la transmittance en fonction du rapport [Ca²⁺] / [COO⁻].

Les courbes relatives à des agents chélatants du calcium sont caractérisées par une brusque chute de la transmittance, pour une certaine quantité de solution de chlorure de calcium introduite, cette chute correspondant, à l'apparition de chélates insolubles du calcium obtenus par floculation.
Ce test est donc parfaitement adapté pour déterminer la capacité d'un polymère à former des chélates insolubles du calcium en solution aqueuse, par floculation.

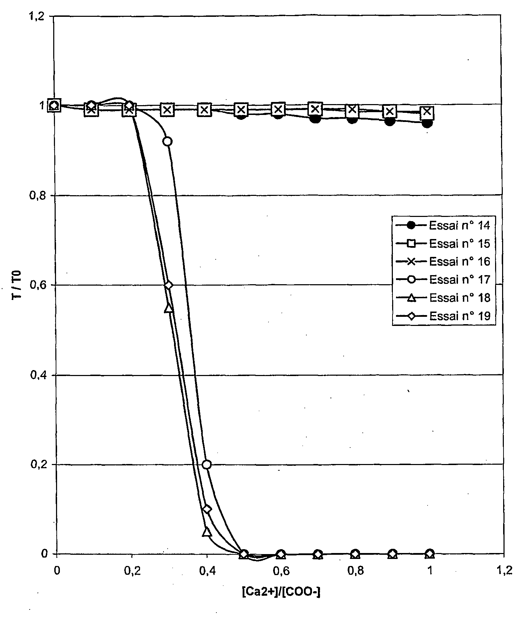

Les courbes (transmittance T / transmittance de la solution initiale T0) = f ( [Ca ²⁺] / [COO⁻]) sont représentées sur la figure 1/1.

### Essai n° 14

Cet essai illustre l'invention et met en oeuvre un copolymère constitué de :
a) 13,6 % en poids d'acide acrylique et 4,9 % en poids d'acide méthacrylique,
b) 81,5 % en poids de méthacrylate de méthoxy polyéthylène glycol de poids moléculaire 2 000 g/mol,
totalement neutralisé par la soude, et de poids moléculaire égal à 42 300 g/mol.

### Essai n° 15

Cet essai illustre l'invention et met en oeuvre un copolymère constitué de :
a) 13,7 % en poids d'acide acrylique et 1,6 % en poids d'acide méthacrylique,
b) 84,7 % en poids de méthacrylate de méthoxy polyéthylène glycol de poids moléculaire 5 000 g/mol,
totalement neutralisé par la soude, et de poids moléculaire égal à 32 500 g/mol.

### Essai n° 16

Cet essai illustre l'invention et met en oeuvre un copolymère constitué de :
a) 13,0 % en poids d'acrylamide,
b) 87,0 % en poids méthacrylate d'oxyéthylène et d'oxypropylène (dans un rapport en poids 90 / 10) de poids moléculaire 3 000 g/mol,
non neutralisé, et de poids moléculaire égal à 38 000 g/mol.

### Essai n° 17

Cet essai illustre l'art antérieur et met en oeuvre un homopolymère de l'acide acrylique totalement neutralisé par la soude et de poids moléculaire égal à 3 000 g/mol.

### Essai n° 18

Cet essai illustre l'art antérieur et met en oeuvre un homopolymère de l'acide acrylique totalement neutralisé par la soude et de poids moléculaire égal à 6 000 g/mol.

### Essai n° 19

Cet essai illustre l'art antérieur et met en oeuvre un homopolymère de l'acide acrylique totalement neutralisé par la soude et de poids moléculaire égal à 12 000 g/mol. L'examen de la figure 1/1 démontre bien que, à l'inverse des homopolymères de l'acide acrylique de l'art antérieur pour lesquels on observe une brusque diminution de la transmittance -ce qui signifie qu'il y a formation de chélates insolubles du calcium par floculation- les copolymères selon l'invention sont caractérisés par une valeur de transmittance pratiquement constante : ces copolymères ne conduisent donc pas à la formation de chélates insolubles du calcium.

### Exemple 4

Cet exemple illustre la fabrication de pâte à papier, entrant dans le procédé selon l'invention de fabrication d'une feuille de papier.

Pour ce faire, on réalise pour chacun des essais n° 20 et 21 un mélange d'une pulpe chimique contenant des fibres et de l'eau et d'une suspension aqueuse de carbonate de calcium, respectivement selon l'art antérieur ou selon l'invention, de manière à obtenir un pourcentage en poids sec de fibres et de carbonate de calcium égale à 56 % du poids total du mélange.

On ajoute alors dans chacun de ces 2 essais, différentes quantités d'un agent de rétention de charges minérales, qui est un polyacrylamide cationique.

On détermine alors, par pesées différentielles et par filtration des mélanges contenant la pulpe chimique, la suspension de carbonate de calcium et l'agent de rétention de charges, le pourcentage en poids de charges minérales qui ont été retenues au sein des fibres de la pulpe.

### Essai n° 20

Cet essai illustre l'art antérieur, et met en oeuvre la suspension aqueuse de carbonate de calcium, obtenue selon l'essai n° 2.

### Essai n° 21

Cet essai illustre l'invention, et met en oeuvre la suspension aqueuse de carbonate de calcium, obtenue selon l'essai n° 6.

Le pourcentage en poids de particules de carbonates de calcium qui ont été retenues dans les fibres est reporté dans le Tableau 3.

**Tableau 3**

| **% d'agent de rétention cationique / poids total du mélange** | **Essai n° 20** | **Essai n° 21** |
|---|---|---|
| 0,05 | 48% | 50% |
| 0,1 | 55% | 64% |
| 0,15 | 67% | 76% |

Le tableau 3 démontre que la mise en oeuvre de la suspension aqueuse selon l'invention, dans le procédé selon l'invention, permet d'améliorer la rétention de carbonate de calcium au sein des fibres.

Ce résultat est d'autant plus surprenant que le polymère selon l'essai n° 20 est un agent chélatant du calcium (voir la concentration en ion calcium dans le tableau 1) qui avait été développé initialement pour améliorer le phénomène de rétention de charge (voir notamment l'enseignement du document WO 97/41302 en page 4 de la présente Demande). De manière tout à fait avantageuse, le polymère selon l'invention permet, dans le cadre de l'essai 21, de diminuer la concentration en ion calcium en phase aqueuse (voir tableau 1) tout en améliorant le phénomène de rétention de charge.

### Exemple 5

Cet exemple illustre la fabrication de pâte à papier, entrant dans le procédé selon l'invention de fabrication d'une feuille de papier.

Pour ce faire, on commence par réaliser des dispersions aqueuses d'un carbonate de calcium précipité (PCC) commercialisé par la société OMYA™ sous le nom de

Omyagloss™ 2000. Concrètement, une dispersion aqueuse de ce PCC (extrait sec : 17 %, 62,5 % et 87,3 % en poids des particules ayant un diamètre moyen respectivement inférieur à 1 µm et 2 µm, tels que mesuré par un Sedigraph™ 5100 commercialisé par MICROMERITICS™). Les dispersions obtenues sont concentrées à un extrait sec de 50 % de leur poids total, avec un filtre-presse. Les gâteaux obtenus sont dispersés par mise en oeuvre de 0,6 % en poids sec (par rapport au poids sec de carbonate de calcium) d'un dispersant selon l'art antérieur ou selon l'invention.

### Essai n° 22

Cet essai illustre l'art antérieur et met en oeuvre un homopolymère de l'acide acrylique totalement neutralisé par la soude, et de poids moléculaire égal à 10 500 g/mol.

### Essai n° 23

Cet essai illustre l'invention et met en oeuvre un copolymère constitué de :
a) 13,7 % en poids d'acide acrylique et 1,6 % en poids d'acide méthacrylique,
b) 84,7 % en poids de méthacrylate de méthoxy polyéthylène glycol de poids moléculaire 5 000 g/mol,
totalement neutralisé par la soude, et de poids moléculaire égal à 32 500 g/mol.

### Essai n° 24

Cet essai illustre l'invention et met en oeuvre un copolymère constitué de :
a) 10,3 % en poids d'acide méthacrylique,
b) 89,7 % en poids de méthacrylate de méthoxy polyéthylène glycol de poids moléculaire 3 000 g/mol,
totalement neutralisé par la soude, et de poids moléculaire égal à 121 500 g/mol.

### Essai n° 25

Cet essai illustre l'invention et met en oeuvre un copolymère constitué de :
a) 13,6 % en poids d'acide acrylique et 4,9% en poids d'acide méthacrylique,
b) 81,5 % en poids de méthacrylate de méthoxy polyéthylène glycol de poids moléculaire 2 000 g/mol,
totalement neutralisé par la soude, et de poids moléculaire égal à 42 300 g/mol.

### Essai n° 26

Cet essai illustre l'invention et met en oeuvre un copolymère constitué de :
a) 21,1 % en poids d'acide acrylique,
b) 78,9 % en poids de méthacrylate de méthoxy polyéthylène glycol de poids moléculaire 2 000 g/mol,
totalement neutralisé par la soude, et de poids moléculaire égal à 35 2000 g/mol.

Pour les dispersions obtenues selon les essais n° 22 à 26, on a déterminé les mêmes caractéristiques que celles mesurées dans l'exemple 1. De plus, on a déterminé le coefficient de diffusion de la lumière S, selon la méthode indiquée dans le document WO 02/49766. Les résultats sont indiqués dans le tableau 4.

**Tableau 4**

| **Essai n°** | | **22** | **23** | **24** | **25** | **26** |
|---|---|---|---|---|---|---|
| **Art Antérieur (AA) / Invention (IN)** | | AA | IN | IN | IN | IN |
| **Viscosités Brookfield™** | **µ₁₀ (t0)** | 260 | 2700 | 2000 | 2700 | 4390 |
| | **µ₁₀₀ (t₀)** | 100 | 410 | 350 | 410 | 630 |
| | **µ₁₀ (t8AVAG)** | 1140 | 750 | 5680 | 750 | 4380 |
| | **µ₁₀₀ (t8AVAG)** | 260 | 320 | 1250 | 320 | 770 |
| | **µ₁₀ (t8APAG)** | 1640 | 2340 | 4900 | 2340 | 3540 |
| | **µ₁₀₀ (t8APAG)** | 260 | 370 | 1000 | 370 | 550 |
| **S (m²/kg)** | | 218 | 234 | 235 | 219 | 223 |

Ces résultats démontrent que les copolymères selon l'invention :
- permettent d'obtenir des suspensions aqueuses de carbonate de calcium, dispersées et stables dans le temps ;
- permettent aussi, par rapport à l'art antérieur, d'améliorer le coefficient de diffusion de la lumière S.

On réalise ensuite un mélange d'une pulpe chimique contenant des fibres et de l'eau et de la dispersion aqueuse de PCC précédemment obtenue, de manière à obtenir un pourcentage en poids sec de fibres et de carbonate de calcium égale à 51,5 % du poids total du mélange.

On ajoute alors dans chacun des mélanges, différentes quantités d'un agent de rétention de charges minérales, qui est le Polymin™ 540 commercialisé par BASF™.

On détermine alors, par pesées différentielles et par filtration des mélanges contenant la pulpe chimique, la dispersion de PCC et l'agent de rétention de charges, le pourcentage en poids de charges minérales qui ont été retenues au sein des fibres de la pulpe.

### Essai n° 27

Cet essai illustre l'art antérieur, et met en oeuvre la dispersion aqueuse de carbonate de calcium, obtenue selon l'essai n° 22.

### Essai n° 28

Cet essai illustre l'invention, et met en oeuvre la dispersion aqueuse de carbonate de calcium, obtenue selon l'essai n° 23.

### Essai n° 29

Cet essai illustre l'invention, et met en oeuvre la dispersion aqueuse de carbonate de calcium, obtenue selon l'essai n° 24.

### Essai n° 30

Cet essai illustre l'invention, et met en oeuvre la dispersion aqueuse de carbonate de calcium, obtenue selon l'essai n° 25.

### Essai n° 31

Cet essai illustre l'invention, et met en oeuvre la dispersion aqueuse de carbonate de calcium, obtenue selon l'essai n° 26.

Le pourcentage en poids de particules de carbonates de calcium qui ont été retenues dans les fibres est reporté dans le tableau 5.

**Tableau 5**

| **% d'agent de rétention cationique / poids total du mélange** | **Essai n° 27** | **Essai n° 28** | **Essai n° 29** | **Essai n° 30** | **Essai n° 31** |
|---|---|---|---|---|---|
| 0,05 | 18% | 37% | 22% | 33% | 30% |
| 0,1 | 37% | 68% | 50% | 64% | 60% |
| 0,125 | 45% | 76% | 67% | 75% | 72% |

Le tableau 5 démontre que la mise en oeuvre de la dispersion aqueuse de carbonate de calcium dispersé selon l'invention permet, de manière très significative et tout à fait surprenante par rapport à l'art antérieur, d'améliorer la rétention de carbonate de calcium au sein des fibres.

### Exemple 6

Cet exemple illustre la fabrication de pâte à papier, entrant dans le procédé selon l'invention de fabrication d'une feuille de papier.
Pour ce faire, on commence par réaliser des suspensions aqueuses d'un carbonate de calcium (GCC) par broyage d'une calcite, en vue d'obtenir un extrait sec égal à 65 %. On met en oeuvre dans chacun des essais suivants 0,35 % en poids sec de polymère comme agent d'aide au broyage, par rapport au poids sec de carbonate de calcium.

### Essai n° 32

Cet essai illustre l'art antérieur et met en oeuvre un homopolymère de l'acide acrylique neutralisé par le sodium (70 % en mole des sites actifs) et par le calcium (30 % en mole des sites actifs), et de poids moléculaire égal à 5 500 g/mol.

### Essai n° 33

Cet essai illustre l'invention et met en oeuvre un copolymère constitué de :
a) 13,6 % en poids d'acide acrylique et 4,9 % en poids d'acide méthacrylique,
b) 81,5 % en poids de méthacrylate de méthoxy polyéthylène glycol de poids moléculaire 2 000 g/mol,
totalement neutralisé par la soude, et de poids moléculaire égal à 42 300 g/mol.

### Essai n° 34

Cet essai illustre l'invention et met en oeuvre un copolymère constitué de :
a) 13,7 % en poids d'acide acrylique et 1,6 % en poids d'acide méthacrylique,
b) 84,7 % en poids de méthacrylate de méthoxy polyéthylène glycol de poids moléculaire 5 000 g/mol,
totalement neutralisé par la soude, et de poids moléculaire égal à 32 500 g/mol.

### Essai n° 35

Cet essai illustre l'invention et met en oeuvre un copolymère constitué de :
a) 21,1 % en poids d'acide acrylique,
b) 78,9 % en poids de méthacrylate de méthoxy polyéthylène glycol de poids moléculaire 2 000 g/mol,
totalement neutralisé par la soude, et de poids moléculaire égal à 35 2000 g/mol.

Pour les suspensions obtenues selon les essais n° 32 à 35, on a mesuré, après broyage, les % de particules en poids inférieur à 1 et 2 µm, notés respectivement % < 1 µm et % < 2 µm. De plus, on a déterminé le cofficient de diffusion de la lumière S, selon la méthode indiquée dans le document WO 02/49766. Les résultats sont indiqués dans le tableau 6.

**Tableau 6**

| **Essai n°** | **32** | **33** | **34** | **35** |
|---|---|---|---|---|
| **Art Antérieur (AA) / Invention (IN)** | AA | IN | IN | IN |
| **% < 1 µm** | 30,5 | 34,4 | 29,7 | 32,5 |
| **% <2 µm** | 60,4 | 69,3 | 61,7 | 66,8 |
| **S (m² / kg)** | 94,7 | 95,0 | 104,6 | 96,7 |

Ces résultats démontrent que les copolymères selon l'invention permettent de broyer efficacement un carbonate de calcium en milieu aqueux, et d'améliorer, par rapport à l'art antérieur, le coefficient de diffusion de la lumière S de la suspension aqueuse obtenue.

On réalise ensuite un mélange d'une pulpe chimique contenant des fibres et de l'eau et de la suspension aqueuse précédemment obtenue, de manière à obtenir un pourcentage en poids sec de fibres et de carbonate de calcium égale à 65 % du poids total du mélange. On ajoute alors dans chacun des mélanges, différentes quantités d'un agent de rétention de charges minérales, qui est un le N 74508 commercialisé par NALCO™.

On détermine alors, par pesées différentielles et par filtration des mélanges contenant la pulpe chimique, la dispersion de PCC et l'agent de rétention de charges, le pourcentage en poids de charges minérales qui ont été retenues au sein des fibres de la pulpe.

### Essai n° 36

Cet essai illustre l'art antérieur, et met en oeuvre la suspension aqueuse de carbonate de calcium, obtenue selon l'essai n° 32.

### Essai n° 37

Cet essai illustre l'invention, et met en oeuvre la suspension aqueuse de carbonate de calcium, obtenue selon l'essai n° 33.

### Essai n° 38

Cet essai illustre l'invention, et met en oeuvre la suspension aqueuse de carbonate de calcium, obtenue selon l'essai n° 34.

### Essai n° 39

Cet essai illustre l'invention, et met en oeuvre la suspension aqueuse de carbonate de calcium, obtenue selon l'essai n° 35.

Le pourcentage en poids de particules de carbonates de calcium qui ont été retenues dans les fibres est reporté dans le tableau 7.

**Tableau 7**

| **% d'agent de rétention cationique / poids total du mélange** | **Essai n° 36** | **Essai n° 37** | **Essai n° 38** | **Essai n° 39** |
|---|---|---|---|---|
| 0,025 | 7 | 9 | 8 | 7 |
| 0,050 | 17 | 21 | 26 | 18 |
| 0,075 | 28 | 30 | 38 | 29 |
| 0,100 | 32 | 41 | 47 | 40 |
| 0,125 | 46 | 53 | 60 | 58 |
| 0,150 | 58 | 62 | 78 | 64 |

Le tableau 5 démontre que la mise en oeuvre de la suspension aqueuse selon l'invention permet, de manière très significative et tout à fait surprenante par rapport à l'art antérieur, d'améliorer la rétention de carbonate de calcium au sein des fibres.

## Revendications

1. Procédé de fabrication d'une feuille de papier à partir d'une pâte, ladite pâte étant issue du mélange de fibres naturelles et / ou synthétiques, d'eau, et d'au moins une dispersion et / ou suspension aqueuse d'au moins une matière minérale, **caractérisé en ce que** ladite dispersion et / ou suspension contient, comme agent dispersant stérique de ladite matière minérale, au moins un copolymère constitué :
a) d'au moins un monomère vinylique,
b) et d'au moins un monomère non ionique, de formule (I) : 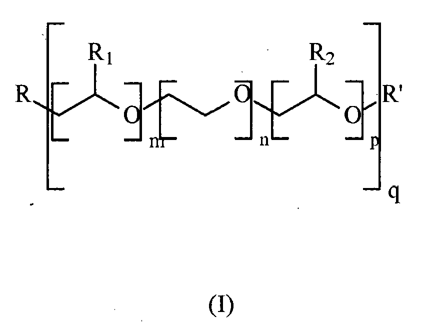 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant au groupe des vinyliques,
- R' représente l'hydrogène ou un radical hydrocarboné ayant 1 à 4 atomes de carbone, R' étnt de préférences le radical méthyle,
ou du mélange de plusieurs monomères de formule (I).

2. Procédé selon la revendication 1, **caractérisé en ce que** ledit copolymère est constitué, exprimé en pourcentage en poids des monomères :
a) de 0,5 % à 50 %, préférentiellement de 1 % à 25 %, très préférentiellement de 5 % à 20 %, d'au moins un monomère vinylique,
b) de 50 % à 99,5 %, préférentiellement de 75 % à 99 %, très préférentiellement de 80 % à 95 %, d'au moins un monomère non ionique, de formule (I) : 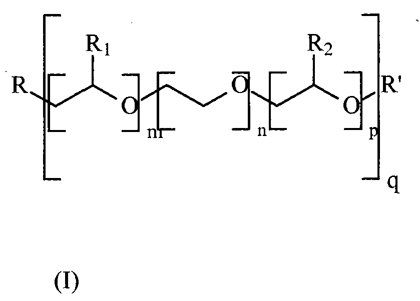 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant au groupe des vinyliques,
- R' représente l'hydrogène ou un radical hydrocarboné ayant 1 à 4 atomes de carbone, R' étant de préférence le radical méthyle, ou du mélange de plusieurs monomères de formule (I),
la somme des pourcentages en poids des monomères a) et b) étant égale à 100 %.

3. Procédé selon l'une des revendications 1 ou 2, **caractérisé en ce que** le monomère vinylique a) est choisi parmi l'acide (méth)acrylique, ou parmi les esters (méth)acryliques, tels que préférentiellement les acrylates et méthacrylates ayant de 1 à 20 atomes de carbone dans leur radical ester, tels que très préférentiellement les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés tels que ceux d'hydroxyéthyle et d'hydroxypropyle, ou parmi les (méth)acrylamide, ou parmi des monomères vinyliques aromatiques tels que préférentiellement le styrène, l'α-méthylstyrène, ou parmi les esters (méth)acryliques de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium, ou parmi les mélanges de ces monomères.

4. Procédé selon l'une des revendications 1 à 3, **caractérisé en ce que** le monomère vinylique a) est l'acide acrylique.

5. Procédé selon l'une des revendications 1 à 3, **caractérisé en ce que** le monomère vinylique a) est l'acide méthacrylique.

6. Procédé selon l'une des revendications 1 à 3, **caractérisé en ce que** le monomère vinylique a) est l'acrylamide.

7. Procédé selon l'une des revendications 1 à 3, **caractérisé en ce que** le monomère vinylique a) est le méthacrylamide.

8. Procédé selon l'une des revendications 1 à 3, **caractérisé en ce que** le monomère vinylique a) est un ester (méth)acrylique de monomères cationiques, tels que préférentiellement de chlorure ou de sulfate de [2-(méthacryloyloxy) éthyl] triméthyl ammonium, de chlorure ou de sulfate de [2-(acryloyloxy) éthyl] triméthyl ammonium, de chlorure ou de sulfate de [3-(acrylamido) propyl] triméthyl ammonium, de chlorure ou de sulfate de diméthyl diallyl ammonium, de chlorure ou de sulfate de [3-(méthacrylamido) propyl] triméthyl ammonium.

9. Procédé selon l'une des revendications 1 à 8, **caractérisé en ce que** ledit copolymère est obtenu sous forme acide et éventuellement distillé, et est partiellement ou totalement neutralisé par un ou plusieurs agents de neutralisation disposant d'un cation monovalent ou polyvalent, lesdits agents étant choisis préférentiellement parmi l'ammoniaque ou parmi les hydroxydes et / ou oxydes de calcium, de sodium, de magnésium, de potassium, de lithium, ou parmi les amines primaires, secondaires ou tertiaires aliphatiques et / ou cycliques telles que préférentiellement la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est choisi parmi l'hydroxyde et / ou l'oxyde de lithium.

10. Procédé selon l'une des revendications 1 à 9, **caractérisé en ce que** ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, par la polymérisation par transfert d'atome radicalaire (ATRP), par la polymérisation radicalaire contrôlée par des dérivés soufrés, choisis parmi des carbamates, des dithioesters ou des trithiocarbonates (RAFT) ou des xanthates.

11. Procédé selon l'une des revendications 1 à 10, **caractérisé en ce que** ledit copolymère peut être, avant ou après la réaction de neutralisation totale ou partielle, traité et séparé en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

12. Procédé selon l'une des revendications 1 à 11, **caractérisé en ce que** la matière minérale est choisie parmi le carbonate de calcium naturel ou synthétique, les dolomies, le calcaire, le kaolin, le talc, le gypse, la chaux, la magnésie, le dioxyde de titane, le blanc satin, le sulfate de baryum, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et **en ce que** ladite matière minérale est choisie préférentiellement parmi le carbonate de calcium naturel ou synthétique ou le talc ou leurs mélanges, et **en ce qu'**elle est très préférentiellement choisie parmi le carbonate de calcium naturel ou synthétique ou leurs mélanges.

13. Procédé selon l'une des revendications 1 à 12, **caractérisé en ce que** les dispersions et / ou suspensions de matières minérales présentent, lorsque la matière minérale est un carbonate de calcium, une teneur en ions calcium en phase aqueuse inférieure à 30 ppm, préférentiellement inférieure à 15 ppm.

14. Procédé selon l'une des revendications 1 à 13, **caractérisé en ce que** les dispersions et / ou suspensions aqueuses d'au moins une matière minérale, contiennent de 0,05 % à 5 %, préférentiellement de 0,1 % à 3 %, très préférentiellement de 0,3 % à 1,5 % en poids sec dudit copolymère, par rapport au poids sec de matières minérales.

15. Procédé de fabrication d'une feuille de papier à partir d'une pâte selon l'une des revendications 1 à 14, **caractérisé en ce que** le pH de la pâte à papier est inférieur à 9, préférentiellement 8, très préférentiellement 7,5.

16. Procédé selon la revendication 15, **caractérisé en ce que** le pH de la pâte à papier est ajusté au moyen d'un acide faible choisi préférentiellement parmi le dioxyde de carbone et / ou l'acide phosphorique.

## Patentansprüche

1. Verfahren zur Herstellung einer Papierbahn aus einem Faserstoff, wobei der Faserstoff aus dem Gemisch aus natürlichen und/oder synthetischen Fasern, Wasser, und mindestens einer Dispersion und/oder einer wässrigen Suspension aus mindestens einem mineralischen Stoff stammt, **dadurch gekennzeichnet, dass** die Dispersion und/oder Suspension als sterisches Dispergiermittel des Mineralstoffs mindestens ein Copolymer enthält, das aus Folgendem besteht:
a) mindestens einem Vinylmonomer,
b) und mindestens einem nicht ionischen Monomer mit der Formel (I): 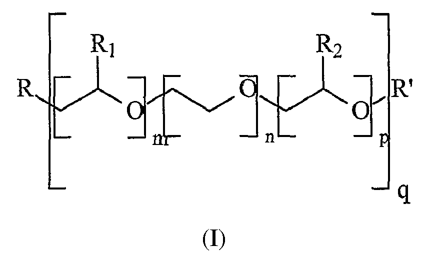 worin:
- m und p für eine Anzahl von Alkylenoxideinheiten kleiner oder gleich 150 stehen,
- n für eine Anzahl von Ethylenoxideinheiten kleiner oder gleich 150 steht,
- q für eine ganze Zahl mindestens gleich 1 steht und die derart ist, dass gilt 5 ≤ (m+n+p)q ≤ 150, und die bevorzugt derart ist, dass gilt 15 ≤ (m+n+p)q ≤ 120,
- R1 für Wasserstoff oder das Methyl- oder Ethylradikal steht,
- R2 für Wasserstoff oder das Methyl- oder Ethylradikal steht,
- R für ein Radikal steht, das eine ungesättigte, polymerisierbare Funktion enthält, die zur Gruppe der Vinylfunktionen gehört,
- R' für Wasserstoff oder ein Kohlenwasserstoffradikal mit 1 bis 4 Kohlenstoffatomen steht, wobei R' bevorzugt das Methylradikal ist,
oder das Gemisch aus mehreren Monomeren der Formel (I).

2. Verfahren nach Anspruch 1, **dadurch gekennzeichnet, dass** das Copolymer, ausgedrückt in Gewichtsprozentanteilen der Monomere, aus Folgendem besteht:
a) 0,5 % bis 50 %, bevorzugt 1 % bis 25 %, stark bevorzugt 5 % bis 20 %, mindestens eines Vinylmonomers,
b) 50 % bis 99,5 %, bevorzugt 75 % bis 99 %, stark bevorzugt 80 % bis 95 %, mindestens eines nicht ionischen Monomers der Formel (I): 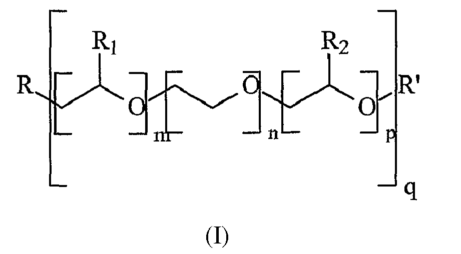 worin:
- m und p für eine Anzahl von Alkylenoxideinheiten kleiner oder gleich 150 stehen,
- n für eine Anzahl von Ethylenoxideinheiten kleiner oder gleich 150 steht,
- q für eine ganze Zahl mindestens gleich 1 steht und die derart ist, dass gilt 5 ≤ (m+n+p)q ≤ 150, und die bevorzugt derart ist, dass gilt 15 ≤ (m+n+p)q ≤ 120,
- R1 für Wasserstoff oder das Methyl- oder Ethylradikal steht,
- R2 für Wasserstoff oder das Methyl- oder Ethylradikal steht,
- R für ein Radikal steht, das eine ungesättigte, polymerisierbare Funktion enthält, die zur Gruppe der Vinylfunktionen gehört,
- R' für Wasserstoff oder ein Kohlenwasserstoffradikal mit 1 bis 4 Kohlenstoffatomen steht, wobei R' bevorzugt das Methylradikal ist,
oder das Gemisch aus mehreren Monomeren der Formel (I),
wobei die Summe der Gewichtsprozentsätze der Monomere a) und b) gleich 100 % ist.

3. Verfahren nach einem der Ansprüche 1 oder 2, **dadurch gekennzeichnet, dass** das Vinylmonomer a) ausgewählt ist aus (Meth)acrylsäure, oder aus (Meth)acrylestern, wie beispielsweise bevorzugt Acrylaten und Methacrylaten mit 1 bis 20 Kohlenstoffatomen in ihrem Esterradikal, wie beispielsweise stark bevorzugt Methyl-, Ethyl-, Isopropyl-, n-Propyl-, Isobutyl-, n-Butyl-, tert-Butyl-, 2-Ethylhexylacrylaten, Methyl-, Ethylmethacrylaten, hydroxylierten Methacrylaten, wie beispielsweise jenen von Hydroxyethyl und Hydroxypropyl, oder aus (Meth)acrylamiden oder aus aromatischen Vinylmonomeren, wie beispielsweise bevorzugt Styrol, α-Methylstyrol, oder aus (Meth)acrylestern von kationischen Monomeren, wie beispielsweise bevorzugt von [2-(Methacryloyloxy)ethyl]trimethylammoniumchlorid oder -sulfat, [2-(Acryloyloxy)ethyl]trimethylammoniumchlorid oder - sulfat, [3-(Acrylamido)propyl]trimethylammoniumchlorid oder -sulfat, Dimethyldiallylammoniumchlorid oder -sulfat, [3-(Methacrylamido)propyl]trimethylammoniumchlorid oder -sulfat oder aus den Gemischen dieser Monomere.

4. Verfahren nach einem der Ansprüche 1 bis 3, **dadurch gekennzeichnet, dass** das Vinylmonomer a) Acrylsäure ist.

5. Verfahren nach einem der Ansprüche 1 bis 3, **dadurch gekennzeichnet, dass** das Vinylmonomer a) Methacrylsäure ist.

6. Verfahren nach einem der Ansprüche 1 bis 3, **dadurch gekennzeichnet, dass** das Vinylmonomer a) Acrylamid ist.

7. Verfahren nach einem der Ansprüche 1 bis 3, **dadurch gekennzeichnet, dass** das Vinylmonomer a) Methycrylamid ist.

8. Verfahren nach einem der Ansprüche 1 bis 3, **dadurch gekennzeichnet, dass** das Vinylmonomer a) ein (Meth)acrylsäureester von kationischen Monomeren ist, wie beispielsweise bevorzugt von [2-(Methacryloyloxy)ethyl]trimethylammoniumchlorid oder -sulfat, [2-(Acryloyloxy)ethyl]trimethylammoniumchlorid oder - sulfat, [3-(Acrylamido)propyl]tnmethylammoniumchlorid oder -sulfat, Dimethyldiallylammoniumchlorid oder -sulfat, [3-(Methacrylamido)propyl]trimethylammoniumchlorid oder -sulfat.

9. Verfahren nach einem der Ansprüche 1 bis 8, **dadurch gekennzeichnet, dass** das Copolymer in Form von Säure und gegebenenfalls destilliert erhalten wird und teilweise oder vollständig durch ein oder mehrere Neutralisierungsmittel neutralisiert ist, das/die über ein einwertiges oder mehrwertiges Kation verfügt/verfügen, wobei die Mittel bevorzugt aus Ammoniak oder aus Calcium-, Natrium-, Magnesium-, Kalium-, Lithiumhydroxiden und/oder -oxiden oder aus primären, sekundären oder tertiären aliphatischen und/oder cyclischen Aminen, wie bevorzugt zum Beispiel Stearylamin, Ethanolaminen (Mono-, Di-, Triethanolamin), Mono- und Diethylamin, Cyclohexylamin, Methylcyclohexylamin, Aminomethylpropanol, Morpholin ausgewählt sind und bevorzugt dadurch, dass das Neutralisierungsmittel aus Lithiumhydroxid und/oder -oxid ausgewählt ist.

10. Verfahren nach einem der Ansprüche 1 bis 9, **dadurch gekennzeichnet, dass** das Copolymer durch Verfahren zur radikalischen Lösungspolymerisation, zur direkten oder inversen Emulsionspolymerisation, zur Suspensionspolymerisation oder Fällungspolymerisation in Lösungsmitteln in Gegenwart von katalytischen Systemen und Übertragungsmitteln, oder auch durch Verfahren zur kontrollierten radikalischen Polymerisation und bevorzugt durch die kontrollierte Nitroxid(NMP)-Polymerisation oder durch die kontrollierte Cobaloxim-Polymerisation, durch die Atom Transfer Radical Polymerisation (ATRP), durch die radikalische Polymerisation, die von Schwefelderivaten, ausgewählt aus Carbamaten, Dithioestern oder Trithiocarbonaten (RAFT) oder Xanthaten, kontrolliert wird, erhalten wird.

11. Verfahren nach einem der Ansprüche 1 bis 10, **dadurch gekennzeichnet, dass** das Copolymer vor oder nach der vollständigen oder teilweisen Neutralisierungsreaktion gemäß statischer oder dynamischer Verfahren mit einem oder mehreren polaren Lösungsmitteln, die bevorzugt zur Gruppe bestehend aus Wasser, Methanol, Ethanol, Propanol, Isopropanol, Butanolen, Aceton, Tetrahydrofuran oder deren Gemischen gehören, behandelt und in mehrere Phasen getrennt werden kann.

12. Verfahren nach einem der Ansprüche 1 bis 11, **dadurch gekennzeichnet, dass** der Mineralstoff ausgewählt ist aus natürlichem oder synthetischem Calciumcarbonat, Dolomitstoffen, Kalkstein, Kaolin, Talkum, Gips, Baukalk, Magnesia, Titandioxid, Satinweiß, Bariumsulfat, Aluminiumtrioxid oder auch Aluminiumtrihydroxid, Siliziumdioxiden, Glimmer und Gemischen dieser Füllstoffe untereinander, wie beispielsweise Talkum-Calciumcarbonat-Gemischen, Calciumcarbonat-Kaolin-Gemischen oder auch Gemischen aus Calciumcarbonat mit Aluminiumtrihydroxid oder Aluminiumtrioxid, oder auch Gemischen mit synthetischen oder natürlichen Fasern oder auch Doppelstrukturen der Mineralien, wie beispielsweise Talkum-Calciumcarbonat-Doppelstrukturen oder Talkum-Titandioxid-Doppelstrukturen oder deren Gemischen, und dadurch, dass der mineralische Stoff bevorzugt aus natürlichem oder synthetischem Calciumcarbonat oder Talkum oder deren Gemischen ausgewählt ist, und dadurch, dass er stark bevorzugt aus natürlichem oder synthetischem Calciumcarbonat oder deren Gemischen ausgewählt ist.

13. Verfahren nach einem der Ansprüche 1 bis 12, **dadurch gekennzeichnet, dass** die Dispersionen und/oder Suspensionen der Mineralstoffe, wenn es sich bei dem Mineralstoff um ein Calciumcarbonat handelt, einen Gehalt an Calciumionen in wässriger Phase kleiner 30 ppm, vorzugsweise kleiner 15 ppm aufweisen.

14. Verfahren nach einem der Ansprüche 1 bis 13, **dadurch gekennzeichnet, dass** die Dispersionen und/oder wässrigen Suspensionen aus mindestens einem Mineralstoff 0,05 % bis 5 %, bevorzugt 0,1 % bis 3 %, stark bevorzugt 0,3 % bis 1,5 % Trockengewicht des Copolymers, bezogen auf das Trockengewicht der Mineralstoffe, enthalten.

15. Verfahren zur Herstellung einer Papierbahn aus einem Faserstoff nach einem der Ansprüche 1 bis 14, **dadurch gekennzeichnet, dass** der pH-Wert des Papierfaserstoffs kleiner als 9, bevorzugt 8, stark bevorzugt 7,5 ist.

16. Verfahren nach Anspruch 15, **dadurch gekennzeichnet, dass** der pH-Wert des Papierfaserstoffs mithilfe einer schwachen Säure, bevorzugt ausgewählt aus Kohlendioxid und/oder Phosphorsäure, eingestellt wird.

## Claims

1. A method for manufacturing a sheet of paper from a pulp, said pulp being derived from a mixture of natural and/or synthetic fibers, water, and at least one aqueous dispersion and/or suspension of at least one mineral matter, **characterized in that** said dispersion and/or suspension contains, as a steric dispersing agent of said mineral matter, at least one copolymer consisting:
a) of at least one vinyl monomer,
b) and of at least one non-ionic monomer of formula (I): 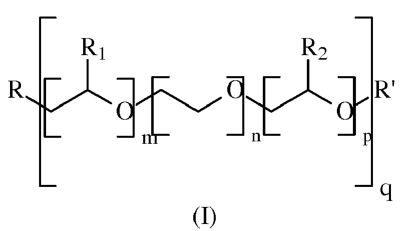 in which:
- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerizable function, belonging to the group of vinyls,
- R' represents hydrogen or a hydrocarbon radical with 1 to 4 carbon atoms, R' being preferentially the methyl radical,
or a mixture of several monomers of formula (I).

2. A method according to claim 1, **characterized in that** said copolymer consists, expressed as a percentage by weight of the monomers:
a) of from 0.5% to 50%, preferentially from 1% to 25%, very preferentially from 5% to 20%, of at least one vinyl monomer,
b) of from 50% to 99.5%, preferentially from 75% to 99%, very preferentially from 80% to 95%, of at least one non-ionic monomer of formula (I): 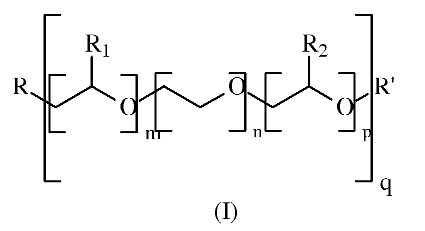 in which:
- m and p represent a number of alkylene oxide units less than or equal to 150,
- n represents a number of ethylene oxide units less than or equal to 150,
- q represents an integer at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerizable function, belonging to the group of vinyls,
- R' represents hydrogen or a hydrocarbon radical with 1 to 4 carbon atoms, R' being preferentially the methyl radical,
or a mixture of several monomers of formula (I),
the sum of the percentages by weight of monomers a) and b) being equal to 100%.

3. A method according to one of the claims 1 or 2, **characterized in that** the vinyl monomer a) is chosen from among (meth)acrylic acid, or from among the (meth)acrylic esters, such as preferentially the acrylates and methacrylates with from 1 to 20 carbon atoms in their ester radical, such as very preferentially the methyl, ethyl, isopropyl, n-propyl, isobutyl, n-butyl, ter-butyl, 2-ethylhexyl acrylates, the methyl and ethyl methacrylates, the hydroxylated methacrylates such as hydroxyethyl and hydroxypropyl methacrylates, or from among the (meth)acrylamides, or from among the aromatic vinyl monomers such as preferentially styrene, α-methylstyrene, or from among the (meth)acrylic esters of cationic monomers, such as preferentially of [2-(methacryloyloxy) ethyl] trimethyl ammonium chloride or sulfate, [2-(acryloyloxy ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate, or from among the mixtures of these monomers.

4. A method according to one of the claims 1 to 3, **characterized in that** the vinyl monomer a) is acrylic acid.

5. A method according to one of the claims 1 to 3, **characterized in that** the vinyl monomer a) is methacrylic acid.

6. A method according to one of the claims 1 to 3, **characterized in that** the vinyl monomer a) is acrylamide.

7. A method according to one of the claims 1 to 3, **characterized in that** the vinyl monomer a) is methacrylamide.

8. A method according to one of the claims 1 to 3, **characterized in that** the vinyl monomer a) is a (meth)acrylic ester of cationic monomers, such as preferentially [2-(methacryloyloxy) ethyl] trimethyl ammonium chloride or sulfate, [2-(acryloyloxy) ethyl] trimethyl ammonium chloride or sulfate, [3-(acrylamido)propyl] trimethyl ammonium chloride or sulfate, dimethyl diallyl ammonium chloride or sulfate, or [3-(methacrylamido)propyl] trimethyl ammonium chloride or sulfate.

9. A method according to one of the claims 1 to 8, **characterized in that** said copolymer is obtained in an acidic and possibly distilled form, and is partially or totally neutralized by one or more neutralization agents having a monovalent or polyvalent cation, said agents being preferentially chosen from among ammonia or from among calcium, sodium, magnesium, potassium or lithium hydroxides and/or oxides, or from among the aliphatic and/or cyclic primary, secondary or tertiary amines such as preferentially stearylamine, ethanolamines (mono-, di-, triethanolamine), mono- and diethylamine, cyclohexylamine, methylcyclohexylamine, amino methyl propanol, morpholine, and preferentially **in that** the neutralization agent is chosen from among lithium hydroxide and/or oxide.

10. A method according to one of the claims 1 to 9, **characterized in that** said copolymer is obtained by processes of radical polymerization in solution, in direct or inverse emulsion, in suspension or precipitation in solvents, in the presence of catalytic systems and transfer agents, or by processes of controlled radical polymerization and preferentially by nitroxide mediated polymerization (NMP) or by cobaloximes, by atom transfer radical polymerization (ATRP), by controlled radical polymerization by sulfur derivatives, chosen from among carbamates, dithioesters or trithiocarbonates (RAFT) or xanthates.

11. A method according to one of the claims 1 to 10, **characterized in that** said copolymer may, before or after the total or partial neutralization reaction, be treated and separated into several phases, using static or dynamic processes, by one or more polar solvents belonging preferentially to the group consisting of water, methanol, ethanol, propanol, isopropanol, butanols, acetone, tetrahydrofuran or mixtures thereof.

12. A method according to one of the claims 1 to 11, **characterized in that** the mineral matter is chosen from among natural or synthetic calcium carbonate, dolomites, limestone, kaolin, talc, gypsum, lime, magnesium, titanium dioxide, satin white, barium sulfate, aluminum trioxide or again aluminum trihydroxide, silicas, mica and a mixture of these fillers with each other, such as talc-calcium carbonate, calcium carbonate-kaolin mixtures, or again mixtures of calcium carbonate with aluminum trihydroxide or aluminum trioxide, or again mixtures with synthetic or natural fibers, or again mineral co-structures such as talc-calcium carbonate or talc-titanium dioxide co-structures, or mixtures thereof, and **in that** said mineral matter is chosen preferentially from among natural or synthetic calcium carbonate or talc or mixtures thereof, and **in that** it is very preferentially chosen from among natural or synthetic calcium carbonate or mixtures thereof.

13. A method according to one of the claims 1 to 12, **characterized in that** the dispersions and/or suspensions of mineral matters, when the mineral matter is a calcium carbonate, have a calcium ion content in aqueous phase less than 30 ppm, preferentially less than 15 ppm.

14. A method according to one of the claims 1 to 13, **characterized in that** the aqueous dispersions and/or suspensions of at least one mineral matter contain from 0.05% to 5%, preferentially from 0.1% to 3%, very preferentially from 0.3% to 1.5% by dry weight of said copolymer, relative to the dry weight of mineral matters.

15. A method for manufacturing a sheet of paper from a pulp according to one of the claims 1 to 14, **characterized in that** the paper pulp's pH is less than 9, preferentially 8, very preferentially 7.5.

16. A method according to claim 15, **characterized in that** the pH of the paper pulp is adjusted by means of a weak acid preferentially chosen from among carbon dioxide and/or phosphoric acid.
